# FASCICULE DE BREVET EUROPEEN

(11) **EP 0 365 401 B1**
(45) Date de publication et mention de la délivrance du brevet: **18.08.1993**
(21) Numéro de dépôt: 89402819.0
(22) Date de dépôt: 12.10.1989
(51) Int. Cl.: H04L 25/30

(54) **Circuit comparateur à hystérésis variable pour interface audionumérique de réception**
Vergleichsschaltung mit variabler Hysterese für eine digitale Audio-Empfangsschnittstelle
Comparator circuit with variable hysterisis for a digital audio reception interface

(30) Priorité: 14.10.1988 FR 8813543
(43) Date de publication de la demande: 25.04.1990
(73) Titulaire: TELEDIFFUSION DE FRANCE, 75932 Paris Cédex 15 (FR)
(72) Inventeur: Weisser, Alain François, F-92140 Clamart (FR)
(74) Mandataire: Mongrédien, André

(56) Documents cités:
- WO-A-81/02653
- US-A- 3 531 726
- IEEE TRANSACTIONS ON COMMUNICATIONS, vol. COM-20, no. 5, octobre 1972, pages 1038-1041; E.C. THIEDE: "Decision hysteresis reduces digital Pe"

## Description

L'invention concerne un circuit comparateur à hystérésis commutable destiné à équiper une interface audionumérique de réception.

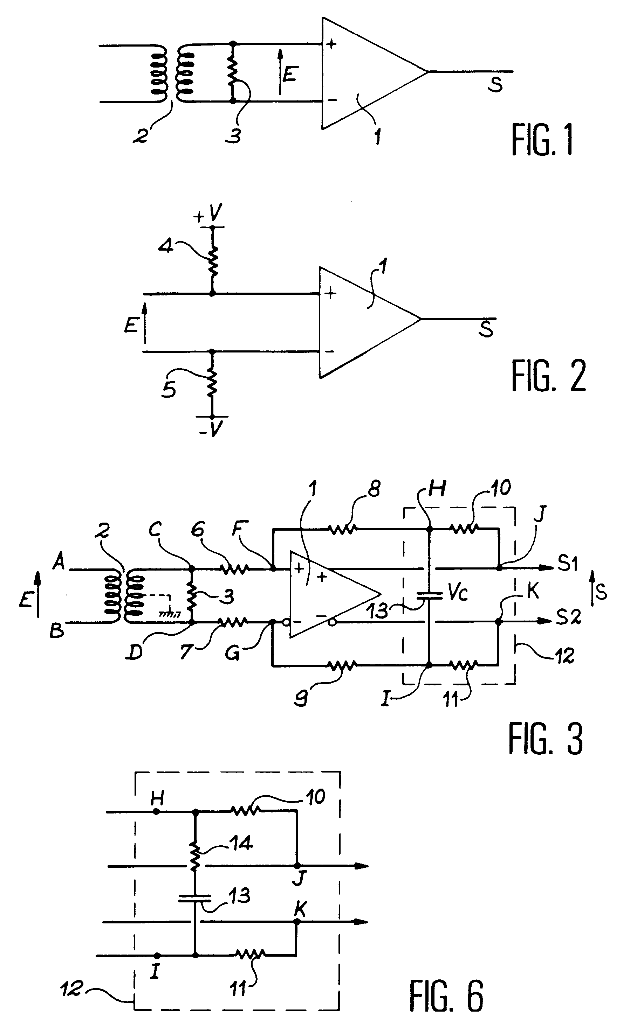

Classiquement, les liaisons entre différents matériels audionumériques sont assurées par des câbles reliant les matériels au moyen d'une interface normalisée par l'UER et par le CCIR (Recommandation 647). Les signaux transmis par ces liaisons sont codés au moyen d'un codage à deux niveaux. La réception peut être assurée au moyen d'un simple comparateur 1, de préférence placé derrière un transformateur tel que représenté sur la figure 1. Le signal est appliqué sur le primaire du tranformateur 2, le signal fourni par le secondaire est appliqué à travers une charge 3, aux entrées directe et indirecte du comparateur 1.

Il est souhaitable en général, en l'absence d'autres contraintes, que le comparateur réagisse pour des tensions d'entrées différentielles aussi réduites que possible, afin de se prémunir au mieux des réductions d'amplitude du signal reçu, consécutives soit à une atténuation générale du signal reçu de l'émetteur, soit à une atténuation sélective, par exemple aux fréquences élevées.

Il est en conséquence nécessaire d'utiliser un circuit comparateur très sensible.

Or, l'utilisation d'un comparateur très sensible est gênante dans certaines applications, par exemple dans des grilles de commutation de signaux audionumériques car ces grilles, qui sont constituées de simples multiplexeurs, ne possèdent pas de circuit susceptible de distinguer du bruit d'un signal audionumérique de faible amplitude.

Or, la demanderesse a constaté qu'en l'absence de signal appliqué à l'entrée, si le circuit comparateur est un circuit très sensible, son état est déterminé par les divers signaux parasites recueillis par l'entrée, il s'agit d'ailleurs généralement de signaux parasites dus à la diaphonie.

Ce phénomène se produit dans les grilles de commutation audionumériques car ces grilles ont plusieurs entrées dont certaines sont alimentées alors qu'une ou plusieurs autres sont déconnectées ou connectées à un équipement qui est arrêté.

Dans de telles circonstances, l'entrée non alimentée est excitée par diaphonie, ce qui, selon le cas, se traduit :
- soit par l'apparition d'un signal semblable à celui de l'entrée perturbatrice. Le comparateur de la voie perturbée réagit alors comme celui de la voie perturbatrice. L'atténuation de diaphonie est compensée par le grand gain comparateur et tout se passe comme si l'entrée perturbée était raccordée directement à l'entrée perturbatrice,
- soit plus souvent, par l'apparition d'un signal déformé, en général riche en fréquences élevées et affecté par les diverses résonances du circuit. Dans ce cas, la sortie du comparateur ne représente aucun signal d'interface valide mais commute rapidement entre les deux niveaux logiques.

Ni l'un ni l'autre de ces deux comportements ne sont souhaitables en règle générale car ils conduisent à propager en aval un signal d'amplitude normale (au moyen du circuit comparateur) en réponse à un signal de diaphonie.

Pour éviter d'avoir une trop grande sensibilité, et donc pour éviter d'avoir un déclenchement intempestif au bruit, il est usuel d'utiliser des circuits comparateurs ayant une hystérésis suffisamment grande.

Cette solution a l'inconvénient de compromettre les performances de l'équipement dans les cas où le signal reçu est réduit et présente de ce fait une faible amplitude.

En effet, dans ce cas, le plus faible signal activant le comparateur est un signal dont l'amplitude crête à crête est égale à l'hystérésis du comparateur.

On a représenté sur la figure 1 le schéma d'un circuit comparateur classique utilisé dans une interface audionumérique de réception.

Le signal audionumérique arrivant par une ligne bifilaire non représentée est appliqué sur le primaire d'un transformateur 2. La tension différentielle E présente sur une charge 3 connectée entre les bornes du secondaire du transformateur 2 est appliquée sur les entrées différentielles d'un comparateur 1 ayant une grande hystérésis.

Une autre solution connue par ailleurs consiste à utiliser un réseau de polarisation 4, 5 à l'entrée d'un comparateur 1 tel que cela est représenté sur la figure 2, de manière à placer la sortie du comparateur dans un état connu lorsque ses entrées ne sont pas raccordées.

Des dispositifs de ce type sont couramment intégrés dans les récepteurs de ligne conformes à la norme RS 422. Toutefois la présence d'un transformateur entre la ligne d'arrivée et l'entrée du comparateur rendrait ces dispositifs inefficaces puisque le secondaire présente dans tous les cas une résistance faible, qui annulerait le déséquilibre créé par les résistances 4 et 5.

La présente invention a pour but de remédier à l'ensemble de ces inconvénients. L'invention a donc pour objet un circuit comparateur pour interface audionumérique de réception susceptible de recevoir un signal de période ou de pseudo période T, caractérisé en ce que le comparateur est muni d'une boucle de réaction entre sortie et entrée, cette boucle étant agencée de manière à former un filtre passe-bas qui modifie l'hystérésis du circuit en fonction de la présence ou non d'un signal audionumérique en entrée.

Avantageusement le signal audionumérique reçu est un signal codé par un code biphase.

Avantageusement, le filtre passe-bas a une constante de temps supérieure à la période ou pseudo-période du signal d'entrée.

Avantageusement, on peut constituer un montage symétrique en utilisant un comparateur à entrées et sorties différentielles et en établissant un chemin de réaction entre chaque sortie et l'entrée correspondante.

Dans ce dernier cas, le filtre comporte avantageusement un simple condensateur reliant les deux boucles de réaction.

Les caractéristiques et avantages de l'invention ressortiront mieux de la description qui va suivre, donnée à titre illustratif mais non limitatif, en référence aux dessins annexés, sur lesquels :
- la figure 1 représente le schéma d'un circuit comparateur selon l'art antérieur,
- la figure 2 représente le schéma d'un autre circuit comparateur selon l'art antérieur,
- la figure 3 représente le schéma d'un circuit comparateur selon l'invention,
- la figure 4 représente l'évolution du signal de sortie et de la tension de seuil lors de l'apparition d'un signal utile en entrée,
- la figure 5 représente l'évolution du signal de sortie et de la tension de seuil lors de la disparition du signal utile en entrée,
- la figure 6 représente le schéma d'une variante de réalisation du filtre conformément à l'invention.

Les figures 1 et 2 sont des schémas relatifs à l'état de la technique et ont déjà été décrites.

La figure 3 représente le schéma d'un circuit comparateur pour une interface audionumérique selon l'invention.

Le signal audionumérique provenant d'une ligne bifilaire non représentée est appliqué aux bornes A, B du primaire d'un transformateur 2. Une charge constituée d'au moins une résistance 3 est connectée entre les bornes C et D du secondaire du transformateur 2. Une résistance 6 permet de relier le point C correspondant à une borne du secondaire à l'entrée non inverseuse du comparateur 1 et une résistance 7 permet de relier le point D correspondant à l'autre borne à l'entrée inverseuse du comparateur 1. Les boucles de réaction du comparateur 1 comprennent deux résistances en série, les résistances 8 et 10 reliant la sortie différentielle non-inverseuse S1 à l'entrée différentielle non-inverseuse F et les résistances 9 et 11 reliant la sortie différentielle inverseuse S2 à l'entrée différentielle inverseuse G.

Les résistances 8 et 6 sont reliées en un point commun F, les résistances 7 et 9 sont reliées en un point commun G.

Un condensateur 13 est connecté entre le point commun H des résistances 8 et 10 et le point commun I des résistances 9 et 11.

Les résistances 10 et 11 et le condensateur 13 forment un filtre passe-bas 12. Ce filtre est interposé entre les sorties J, K du montage et les accès H, I du circuit de réaction constitué de façon connue par les résistances 6, 7, 8 et 9.

La constante de temps du filtre est choisie de manière à être supérieure à la pseudo-période du signal audionumérique d'entrée. Ce signal se présente sous forme codée par une technique classique de codage biphase.

De façon simplifiée, le circuit comparateur fonctionne suivant le principe suivant :
- en l'absence de signal utile d'entrée, le comparateur est bloqué dans un état logique donné, le filtre passe-bas n'intervient pas et une tension continue est ramenée sur les entrées du comparateur évitant tout basculement intempestif en présence de bruit ou de diaphonie,
- en présence d'un signal utile d'entrée supérieur à la tension continue ramenée dans le mode précédent, le comparateur est activé et commute avec un rapport cyclique proche de 50%. La tension de sortie différentielle, intégrée par le réseau passe-bas, tend vers zéro, ce qui supprime la tension continue ramenée à l'entrée et permet d'obtenir un découpage correct du signal d'entrée.

On notera que la disparition de la tension de réaction est liée à la structure du signal d'interface audionumérique dans lequel les deux niveaux logiques sont émis aussi souvent l'un que l'autre (codage sans composante continue). Le procédé objet de l'invention est applicable plus généralement à la réception de signaux numériques à composante continue nulle ou faible.

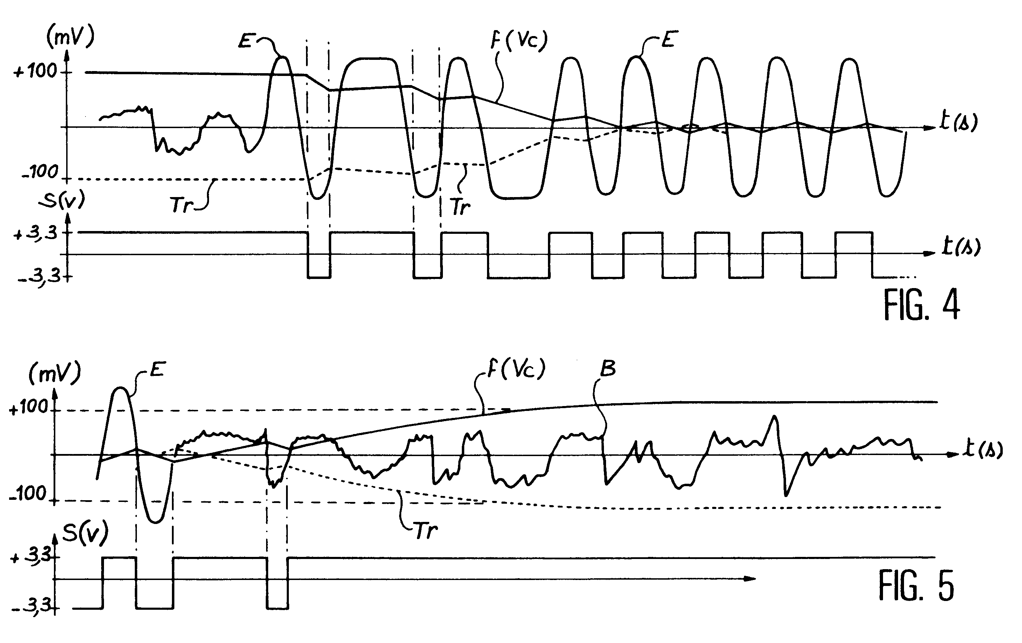

On a représenté sur la figure 4 l'évolution en fonction du temps du signal de réaction f(Vc) qui est fonction de la tension Vc aux bornes du condensateur. Cette figure représente également l'évolution en fonction du temps du seuil de détection Tr faisant basculer la tension de sortie. Ce seuil correspond à la tension opposée à la tension de réaction. L'évolution que montre cette figure correspond à l'apparition d'un signal utile E en entrée et la tension de sortie S correspondante.

Sur la figure 5, on a représenté en fonction du temps, l'évolution du signal de réaction f(Vc) et du seuil de détection Tr lors de la disparition du signal utile E en entrée, un signal B correspondant à du bruit pouvant continuer à être présent. On a également représenté l'évolution du signal de sortie S correspondant.

Dans ces représentations, la constante de temps du filtre a été prise exagérément faible afin de mieux faire apparaîre le phénomène d'évolution de l'hystérésis du circuit obtenu par l'action du filtre dans la boucle de réaction. La tension de réaction est la tension rajoutée par la présence du filtre dans la boucle de réaction. La tension de sortie S est positive lorsque la tension d'entrée augmentée de la tension de réaction f(VC) est positive. Il est équivalent de dire que la tension de sortie S est positive lorsque la tension d'entrée est supérieure à la tension de seuil Tr,(-f(Vc)). Tout se passe comme si la tension d'entrée était comparée à l'opposée de la tension de réaction. Dans la figure 5, le signal B correspondant à du bruit (disparition du signal utile E) a été représenté avec une amplitude exagérée par rapport aux cas réels rencontrés afin de mieux faire apparaître le phénomène également.

On a représenté sur la figure 6 une variante de réalisation du dispositif selon l'invention.

Dans cette variante, le condensateur 13 est en série avec une résistance 14 qui permet de maintenir une faible hystérésis à l'ensemble du circuit même en présence de signal utile en entrée.

A titre d'exemple purement illustratif, un ensemble de valeurs et de références est donné ci-dessous :
- une prise (représentée en pointillés) au secondaire du transformateur a été rajoutée pour fixer le potentiel de mode commun autour de OV,
- le transformateur présente un rapport de transformation de 2/1, ce qui réduit la tension nominale en sortie du transformateur autour de ± 1V crête et porte l'impédance d'entrée autour de 250 ohms,
- en l'absence de signaux d'entrée, le comparateur est dans un état fixe. La tension Vc est de l'ordre de 3V, ce qui ramène environ 100 mV entre les entrées du comparateur (tensions de seuil). Toute tension d'entrée inférieure à 200 mV au primaire du transformateur est ramenée à moins de 100 mV aux entrées du comparateur. Elle ne dépasse pas la tension de seuil et le comparateur reste dans le même état,
- la constante de temps du filtre RC est de l'ordre de 20 µs et est choisie pour être grande par rapport à la durée des signaux reçus qui est de 160 à 500 ns entre transitions.

- E nominal: = ±2V crête,
- VCD: = ±1V crête,
- résistance 3: = 68 Ω,
- résistances 6,7: = 330Ω,
- résistances 8,9: = 10 kΩ,
- résistances 10,11: = 1 kΩ,
- condensateur C: = 10 nF,
- comparateur 1: = LM 360,

S1 = 3,5 V et S2 = 0,2 V
ou
S1 = 0,2 V et S2 = 3,5 V

## Revendications

1. Circuit comparateur susceptible de recevoir un signal numérique à deux niveaux, de période ou de pseudo-période T à composante continue nulle ou faible, caractérisé en ce qu'il comporte une boucle de réaction entre sortie et entrée, cette boucle étant agencée de manière à former un filtre passe-bas (12) qui modifie l'hystérésis du circuit en fonction de la présence ou non d'un signal numérique en entrée.

2. Circuit comparateur selon la revendication 1, caractérisé en ce que le signal numérique (E) reçu et appliqué à l'entrée du circuit est un signal codé par un code biphase ayant une pseudo-période (T).

3. Circuit comparateur selon la revendication 1 ou 2, caractérisé en ce que le filtre passe-bas (12) a une constante de temps supérieure à la période ou pseudo-période (T).

4. Circuit comparateur selon l'une quelconque des revendications 1 à 3, caractérisé en ce que le filtre (12) comprend un condensateur (13) reliant entre elles deux boucles de réaction établies entre les entrées et sorties correspondantes d'un comparateur à entrées et sorties différentielles.

5. Circuit comparateur selon l'une quelconque des revendications 1 à 4, caractérisé en ce que le filtre (12) comprend un condensateur (13) en série avec une résistance (14) pour maintenir une hystérésis réduite en présence du signal d'entrée.

## Patentansprüche

1. Vergleichsschaltung, die geeignet ist, ein numerisches Zweipegelsignal einer Periode oder Pseudoperiode T mit einer Gleichstromkomponente, die klein ist oder null ist zu empfangen,
dadurch **gekennzeichnet** ,
daß sie zwischen Eingang und Ausgang eine Reaktionsschleife enthält, wobei diese Schleife so gestaltet ist, daß sie einen Tiefpaßfilter (12) bildet, der die Hysterese der Schaltung modifiziert in Abhängigkeit vom Vorhandensein oder Nichtvorhandensein eines numerischen Signals am Eingang.

2. Vergleichsschaltung nach Anspruch 1, dadurch gekennzeichnet, daß das empfangene und an den Eingang der Schaltung angelegte Signal (E) ein durch einen biphasigen Code codiertes Signal mit einer Pseudoperiode (T) ist.

3. Vergleichsschaltung nach einem der Ansprüche 1 oder 2, dadurch gekennzeichnet, daß der Tiefpaßfilter (12) eine Zeitkonstante hat, die größer ist als die Periode oder Pseudoperiode (T).

4. Vergleichsschaltung nach einem der Ansprüche 1 bis 3, dadurch gekennzeichnet, daß der Tiefpaßfilter einen Kondensator (13) enthält, der die Reaktionsschleifen miteinander verbindet, die angelegt sind zwischen den entsprechenden Eingängen und Ausgängen eines Vergleichers mit Differentialein- und ausgängen.

5. Vergleichsschaltung nach einem der Ansprüche 1 bis 4, dadurch gekennzeichnet, daß der Filter (12) einen Kondensator (13) in Serie mit einem Widerstand (14) enthält, um eine reduzierte Hysterese bei Vorhandensein des Eingangssignals aufrechtzuerhalten.

## Claims

1. Comparator circuit capable of receiving a two-level digital signal, of period or of pseudo-period T, with nil or low direct current component, characterised in that it includes a feedback loop between output and input, this loop being arranged so as to form a low-pass filter (12) which modifies the hysteresis of the circuit as a function of the presence or otherwise of a digital input signal.

2. Comparator circuit according to Claim 1, characterised in that the digital signal (E) received and applied to the input of the circuit is a signal coded by a biphase code having a pseudo-period (T).

3. Comparator circuit according to Claim 1 or 2, characterised in that the low-pass filter (12) has a time constant greater than the period or pseudo-period (T).

4. Comparator circuit according to any one of Claims 1 to 3, characterised in that the filter (12) comprises a capacitor (13) linking together two feedback loops set up between the corresponding inputs and outputs of a comparator with differential inputs and outputs.

5. Comparator circuit according to any one of Claims 1 to 4, characterised in that the filter (12) comprises a capacitor (13) in series with a resistor (14) for keeping reduced hysteresis in the presence of the input signal.
